# EUROPEAN PATENT SPECIFICATION

(11) **EP 3 133 851 B1**
(45) Date of publication and mention of the grant of the patent: **01.09.2021**
(21) Application number: 16178133.1
(22) Date of filing: 06.07.2016
(51) Int. Cl.: H04W 12/04, H04W 12/06, H04W 84/12

(54) **METHOD AND DEVICE FOR ACQUIRING USING AUTHORITY**
VERFAHREN UND VORRICHTUNG ZUR ERFASSUNG MITTELS AUTORITÄT
PROCÉDÉ ET DISPOSITIF POUR ACQUISITION AU MOYEN D'AUTORITÉ

(30) Priority: 18.08.2015 CN 201510509391
(43) Date of publication of application: 22.02.2017
(73) Proprietor: Xiaomi Inc., Beijing 100085 (CN)
(72) Inventor: HOU, Enxing, Beijing, 100085 (CN); MENG, Deguo, Beijing, 100085 (CN); ZHANG, Yanlu, Beijing, 100085 (CN)
(74) Representative: Hughes, Andrea Michelle

(56) References cited:
- CN-A- 104 159 218
- US-A1- 2012 052 802
- US-A1- 2013 081 113
- US-A1- 2013 107 806
- US-A1- 2014 366 105

## Description

### TECHNICAL FIELD

The present disclosure generally relates to the field of smart home technology, and more particularly to a method and a device for acquiring a using authority.

### BACKGROUND

Along with the improvement of people's living standards, household appliances have been developed towards making them "intelligent". For example, it has become gradually more popular to control the household appliance with a portable terminal device, such as a mobile terminal. As for controlling the household appliance with the terminal device, the terminal device needs to communicate with the household appliance at first, so as to send various controlling instructions to the household appliance.

In general, the terminal device communicates with the household appliance using a password. However, the password needs to be input into the terminal device manually by a user; and the terminal device may communicate with the household appliance automatically with the password subsequently. In this case, the user may forget the password after a long time period, as a result, other terminal devices are unable to communicate with the household appliance in the case that the user forgets the password or a user who knows the password is absent, and thus the household appliance is unable to be controlled by other terminal devices, causing inconvenience for the user.

CN 104 159 218 A discloses a network connection establishment method and device and belongs to the field of internet technologies. US 2014/366105 A1 describes, inter alia, techniques for configuring or setting up a wireless device. US 2013/081113 A1 includes transmitting a message from a first device to a second device. US 2013/107806 A1 describes a method for access configuration in a wireless network.

### SUMMARY

In order to overcome disadvantages existing in the related art, the present disclosure provides in embodiments a method and a device for acquiring a using authority. The technical solutions are shown as below.

According to a first aspect of embodiments of the present disclosure, there is provided a method for acquiring a using authority for use in a first terminal device as defined in claim 1.

Alternatively, acquiring the accessing message sending instruction includes:
acquiring the accessing message sending instruction input; or
receiving the accessing message sending instruction sent from the second terminal device.

During implementation, the method of the present embodiment may be triggered by the first terminal device or the second terminal device, thereby achieving flexibility.

In an implementation of the present embodiment, the method further includes:
establishing a communication with the electricity-consuming device; and
receiving and saving the accessing message sent from the electricity-consuming device.

In this implementation, the accessing message of the electricity-consuming device is acquired by the first terminal device from the electricity-consuming device, instead of manually operating by a user, such that the user's operating steps are reduced, and accordingly an inputting portion of the first terminal device may be of a simplified structure because the accessing message does not need to be input manually, thereby facilitating cost reduction.

Further, establishing the communication with the electricity-consuming device includes: establishing the communication with the electricity-consuming device via a first wireless communicating technology, comprising a Bluetooth technology, a wireless fidelity (WIFI) technology, or a Zigbee communicating technology.

The first terminal device may establish a communication with the electricity-consuming device via various wireless communicating technologies, thereby facilitating achievement.

Further, in the case that the first terminal device establishes a communication with the electricity-consuming device via the Bluetooth technology, the first terminal device serves as a peripheral device, and the electricity-consuming device serves as a center device.

With the first terminal device serving as the peripheral device and the electricity-consuming device serving as the center device, the electricity-consuming device scans the first terminal device and initiates a Bluetooth communication, so as to reduce a hardware configuration of the first terminal device, thereby reducing cost of the first terminal device.

In another implementation of the present embodiment, the method further includes:
establishing a communication with the second terminal device via a second wireless communicating technology, during which password authentication is not required.

During establishing a communication between the first terminal device and the second terminal device, the password authentication is not required, thereby facilitating other users' terminal devices to acquire the accessing message of the electricity-consuming device directly in the case that a user who knows a communicating password of the first terminal device is absent.

In an embodiment, the first terminal device is a wearable device, and the second terminal device is a mobile terminal. The wearable device is used as the first terminal device for saving the accessing message, thereby achieving cost reduction; and the mobile terminal is used as the second terminal device given that the mobile terminal is generally carried with the user, so that the method of the present embodiment is more practical.

In an embodiment, the electricity-consuming device comprises a household appliance and a router.

In an implementation of the present embodiment, establishing the communication with the electricity-consuming device using the accessing message includes:
receiving a communicating instruction input; and
establishing the communication with the electricity-consuming device using the accessing message in accordance with the communicating instruction.

In this implementation of the present embodiment, after receiving the communicating instruction, the second terminal device establishes the communication with the electricity-consuming device, thereby reducing power consumption of the second terminal device.

In another implementation of the present embodiment, the method further includes: establishing a communication with the first terminal device via a second wireless communicating technology, during which password authentication is not required. During establishing a communication between the first terminal device and the second terminal device, the password authentication is not required, thereby facilitating other users' terminal devices to acquire the accessing message of the electricity-consuming device directly in the case that a user who knows a communicating password of the first terminal device is absent.

According to a third aspect of embodiments of the present disclosure, there is provided a device for acquiring a using authority as defined in claim 4.

In an embodiment, the acquiring module is configured to acquire the accessing message sending instruction input; or the acquiring module is configured to receive the accessing message sending instruction sent from the second terminal device.

In an implementation of the present embodiment, the device further includes:
a first establishing module, configured to establish a communication with the electricity-consuming device;
a receiving module, configured to receive the accessing message sent from the electricity-consuming device; and
a saving module, configured to save the accessing message received by the receiving module.

Further, the first establishing module is configured to establish the communication with the electricity-consuming device via a first wireless communicating technology, comprising a Bluetooth technology, a wireless fidelity (WIFI) technology, or a Zigbee communicating technology.

Further, in the case that the first establishing module establishes the communication with the electricity-consuming device via the Bluetooth technology, the first terminal device serves as a peripheral device, and the electricity-consuming device serves as a center device.

In another implementation of the present embodiment, the device further includes: a second establishing module, configured to establish a communication with the second terminal device via a second wireless communicating technology, during which password authentication is not required.

The first terminal device may be a wearable device, and the second terminal device is a mobile terminal.

The electricity-consuming device may comprise a household appliance and a router.

In an implementation of the present embodiment, the establishing module includes:
an instruction receiving sub-module, configured to receive a communicating instruction input; and
an establishing sub-module, configured to establish a communication with the electricity-consuming device using the accessing message in accordance with the communicating instruction received by the instruction receiving sub-module.

In another implementation of the present embodiment, the establishing module is configured to establish a communication with the first terminal device via a second wireless communicating technology, during which password authentication is not required.

The technical solution provided by the embodiments of the present disclosure may have the following advantages. According to embodiments of the present disclosure, the accessing message of the electricity-consuming device is saved in the first terminal device, the second terminal device may acquire the accessing message of the electricity-consuming device directly from the first terminal device, so as to communicate with the electricity-consuming device using the accessing message and acquire the using authority. In the case that the accessing message of the electricity-consuming device has been forgotten or the user who knows the accessing message of the electricity-consuming device is absent, such a means by which the accessing message is acquired provides great convenience for the user.

It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a diagram showing an application scenario of a method for acquiring a using authority according to an illustrative embodiment;
Fig. 2 is a flow chart showing a method for acquiring a using authority according to an illustrative embodiment;
Fig. 3 is a flow chart showing another method for acquiring a using authority according to an illustrative embodiment;
Fig. 4 is a flow chart showing a further method for acquiring a using authority according to an illustrative embodiment;
Fig. 5 is an interaction diagram showing a method for acquiring a using authority according to an illustrative embodiment;
Fig. 6 is an interaction diagram showing another method for acquiring a using authority according to an illustrative embodiment;
Fig. 7 is a schematic diagram showing a device for acquiring a using authority according to an illustrative embodiment;
Fig. 8 is a schematic diagram showing a device for acquiring a using authority according to an illustrative embodiment;
Fig. 9 is a block diagram showing another device for acquiring a using authority according to an illustrative embodiment;
Fig. 10 is a block diagram showing still another device for acquiring a using authority according to an illustrative embodiment;
Fig. 11 is a block diagram showing a further device for acquiring a using authority according to an illustrative embodiment;
Fig. 12 is a block diagram showing a still further device for acquiring a using authority according to an illustrative embodiment;
Fig. 13 is a block diagram showing a yet further device for acquiring a using authority according to an illustrative embodiment; and
Fig. 14 is a block diagram showing a system for acquiring a using authority according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

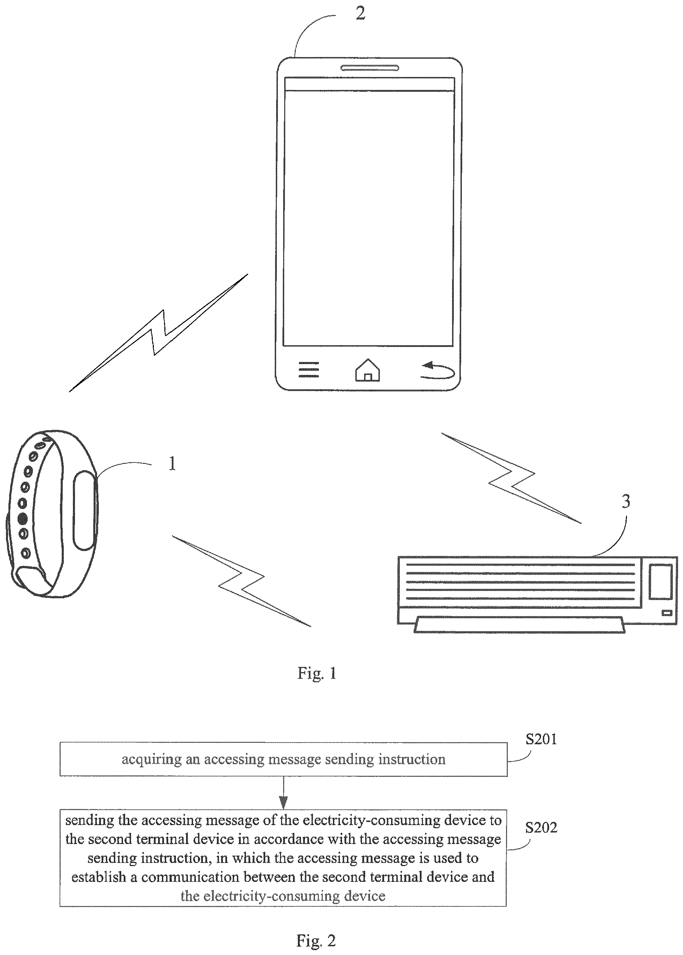

The application scenario of a method for acquiring a using authority is described briefly hereinafter in conjunction with Fig. 1. As shown in Fig. 1, a first terminal device 1 and a second terminal device 2 each may communicate with an electricity-consuming device 3 wirelessly.

The electricity-consuming device 3 is provided with at least one communicating module selected from a group including a Wireless Fidelity (WIFI) communicating module, a Bluetooth communicating module, a Zigbee communicating module and an infrared communicating module; and the at least one communicating module includes the WIFI communicating module. In the case that the electricity-consuming device 3 is provided with at least two communicating modules, the first terminal device 1 and the second terminal device 2 may communicate with the electricity-consuming device 3 wirelessly in the same communicating manner, respectively. For example, the first terminal device 1 and the second terminal device 2 each communicate with the electricity-consuming device 3 via a WIFI technology. The first terminal device 1 and the second terminal device 2 may communicate with the electricity-consuming device 3 wirelessly in different communicating manners, respectively. For example, the first terminal device 1 communicates with the electricity-consuming device 3 via a Bluetooth technology; while the second terminal device 2 communicates with the electricity-consuming device 3 via the WIFI technology.

In the application scenario as shown in Fig. 1, the first terminal device 1 is a smartband, but not limited hereto, the first terminal device 1 may also be other wearable devices other than the smartband, such as a smart watch and a smart necklace. Further, the first terminal device 1 may also be a mobile terminal, for example, a mobile phone, a tablet computer, and so on. In addition, in the application scenario as shown in Fig. 1, the second terminal device 2 is (but is not limited to) a smartphone, the second terminal device 2 may also be other mobile terminals other than the smartphone, the second terminal device 2 may also be a wearable device, such as a smartband and a smart watch. Moreover, in the application scenario as shown in Fig. 1, the electricity-consuming device 3 is an air conditioner. Of course the electricity-consuming device 3 may also be a household appliance (such as a refrigerator and a television) or an electronic device (such as a router) which can be used only accessed via WIFI, but this is not limiting. The number of the terminal devices in the application scenario as shown in Fig. 1 is not limited to two, and may be three or more.

Fig. 2 is a flow chart showing a method for acquiring a using authority according to an illustrative embodiment. As shown in Fig. 2, the method for acquiring the using authority is for use in the first terminal device. The method includes the following steps.

In step S201, an accessing message sending instruction is acquired.

The accessing message sending instruction is used for instructing the first terminal device to send an accessing message to the second terminal device. The accessing message includes a service set identifier (SSID) and a password of the electricity-consuming device.

During implementation, the accessing message sending instruction may be directly input by the first terminal device, or may be sent from the second terminal device.

In step S202, the accessing message of the electricity-consuming device is sent to the second terminal device in accordance with the accessing message sending instruction. The accessing message is used to establish a communication between the second terminal device and the electricity-consuming device using the accessing message.

The second terminal device is configured to establish a communication with the electricity-consuming device using the accessing message received.

During implementation, in the case that the electricity-consuming device is a router, after establishing a communication with the electricity-consuming device, the second terminal device may communicate with a network via the router, thereby sending or receiving data via the network. In the case that the electricity-consuming device is a household appliance, after establishing the communication with the electricity-consuming device, the second terminal device may acquire a controlling authority to the household appliance, so as to send an instruction such as start, stop and mode set.

According to embodiments of the present disclosure, the accessing message of the electricity-consuming device is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

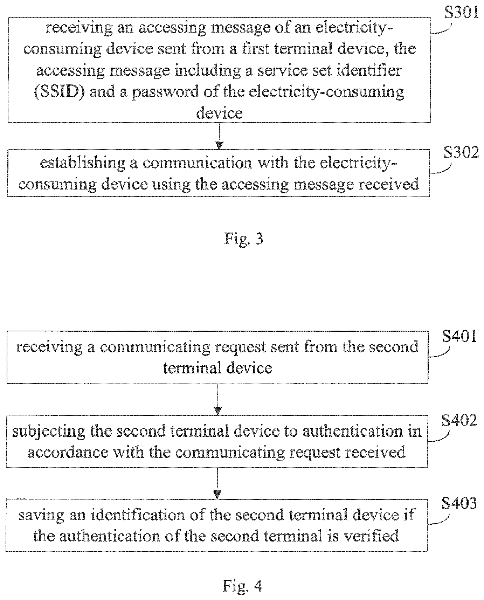

Fig. 3 is a flow chart showing a method for acquiring a using authority according to an illustrative embodiment. As shown in Fig. 3, the method may be for use in the second terminal device. The method includes the following steps.

In step S301, the accessing message of the electricity-consuming device, sent from the first terminal device, is received. The accessing message includes the SSID and the password of the electricity-consuming device.

The accessing message is used to establish a communication between the second terminal device and the electricity-consuming device using the accessing message.

In step S302, a communication with the electricity-consuming device is established using the accessing message received.

During implementation, in the case that the electricity-consuming device is a router, after establishing a communication with the electricity-consuming device, the second terminal device may communicate with a network via the router, thereby sending or receiving data via the network. In the case that the electricity-consuming device is a household appliance, after establishing a communication with the electricity-consuming device, the second terminal device may acquire a controlling authority to the household appliance, so as to send an instruction such as start, stop and mode set.

According to embodiments of the present disclosure, the accessing message of the electricity-consuming device is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

Fig. 4 is a flow chart showing a method for acquiring a using authority according to an illustrative embodiment. As shown in Fig. 4, the method may be for use in the electricity-consuming device. The method includes the following steps.

In step S401, a communicating request, sent from the second terminal device, is received. The communicating request includes an identification of the second terminal device and an accessing message of the electricity-consuming device. The accessing message, including the SSID and the password of the electricity-consuming device, is acquired by the second terminal device from the first terminal device. The accessing message is used to establish a communication between the second terminal device and the electricity-consuming device.

In step S402, the second terminal device is subjected to authentication in accordance with the communicating request received.

In step S403, the identification of the second terminal device is saved if the authentication of the second terminal is verified.

After the identification of the second terminal device is saved, the second terminal device acquires the using authority to the electricity-consuming device.

During implementation, the steps S402 and S403 may also include: comparing a password for the communicating request with a set password (i.e., the above-mentioned password for the accessing message). If the password for the communicating request is identical to the set password, the authentication of the second terminal is verified. If the password for the communicating request is different from the set password, the authentication of the second terminal is not verified.

According to embodiments of the present disclosure, the accessing message of the electricity-consuming device is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

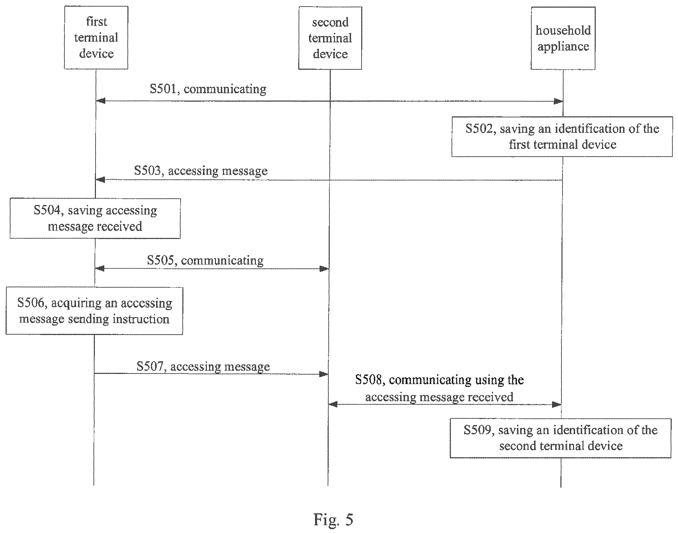

Fig. 5 is an interaction diagram showing a method for acquiring a using authority according to an illustrative embodiment. In the present embodiment, the present disclosure is described by taking a household appliance equipped with a Bluetooth communicating module and a WIFI communicating module as an example. As shown in Fig. 5, the method includes the following steps.

In step S501, the first terminal device communicates with the household appliance.

The step S501 may include: the first terminal device communicating with the household appliance wirelessly via a first wireless communicating technology, including but not limited to a Bluetooth technology, a WIFI technology and a Zigbee technology.

In the case that the first wireless communicating technology is the Bluetooth technology, the step S501 further includes:
the household appliance scanning a Bluetooth device;
sending the communicating request to the first terminal device; and
establishing a communication with the first terminal device via the Bluetooth technology.

The first terminal device serves as a peripheral device, while the electricity-consuming device serves as a center device. In the case that the first terminal device serves as the peripheral device and the electricity-consuming device serves as the center device, the electricity-consuming device scans the first terminal device and initiates a Bluetooth communication, so as to reduce a hardware configuration of the first terminal device, thereby reducing cost of the first terminal device.

During implementation, as the household appliance is not always provided with an operating component, such as a touch panel, a display panel and a button; or the household appliance is not always convenient to operate even if it is provided with these operating components (e.g., a wall-type air conditioner is generally installed at a higher place), it is inconvenient to control the household appliance manually via the Bluetooth technology. Therefore, a mobile terminal may be used to assist the household appliance in communicating with the first terminal device via the Bluetooth technology. Accordingly, the step S501 may further include:
the household appliance receiving a scanning instruction of the mobile terminal;
the household appliance scanning the Bluetooth device and sending an identification of the Bluetooth device scanned to the mobile terminal;
the mobile terminal displaying the Bluetooth device scanned by the household appliance;
the mobile terminal receiving a selecting instruction input and generating a device communicating instruction in accordance with the selecting instruction, the device communicating instruction including an identification of the first terminal device;
initiating a Bluetooth communication with the first terminal device in accordance with the device communicating instruction sent from the mobile terminal, so as to communicate with the first terminal device via the Bluetooth technology.

In the case that the mobile terminal is desired to assist the household appliance in communicating with the first terminal device via the Bluetooth technology, the household appliance needs to communicate with the mobile terminal at first, for example, via the WIFI technology. At this time, the mobile terminal needs to output an accessible SSID list for the user. After the user selects the SSID of the household appliance and inputs a corresponding password, the mobile terminal may access the household appliance via the WIFI technology.

In the present embodiment, the first terminal device communicates with the household appliance via the Bluetooth technology, thereby meeting requirements to lower power consumption of the first terminal device. During implementation, the first wireless communicating technology is preferably a communicating technology without password authentication, thereby reducing user's operating steps. With the Bluetooth technology, the peripheral device is configured to be capable of being communicated without the password authentication. Of course, the first wireless communicating technology may also be a communicating technology requiring the password authentication.

In step S502, the household appliance saves the identification of the first terminal device. The identification of the first terminal device may be a media access control (MAC) address.

Through the step S502, the first terminal device acquires the using authority of the household appliance. Accordingly, the method of the present embodiment may further include:
the household appliance receiving a first appliance controlling instruction sent from the first terminal device, the first appliance controlling instruction including the identification of the first terminal device;
the household appliance comparing the identification of the first terminal device in the first appliance controlling instruction with an identification of the terminal device saved in the household appliance;
executing the first appliance controlling instruction received if the identification of the first terminal device in the first appliance controlling instruction is identical to the identification of the terminal device saved in the household appliance (indicating that the first terminal device has the using authority); and not executing the first appliance controlling instruction received if the identification of the first terminal device in the first appliance controlling instruction is different from the identification of the terminal device saved in the household appliance (indicating that the first terminal device does not have the using authority).

The first appliance controlling instruction may be used to set up an ON state, an OFF state, an operating time, a gear or an operating mode of the household appliance, but the disclosure is not limited to these examples.

The step S502 is an optional step. In the case that the first terminal device merely serves as an intermediate device for saving the accessing message, other than controlling the household appliance, step S502 may not be executed.

In step S503, the household appliance sends the accessing message to the first terminal device.

The accessing message, including the SSID and the password of the household appliance, is used for enabling the terminal device to access the household appliance as an access point.

In the present embodiment, the accessing message is sent to the first terminal device from the household appliance. In other embodiments, the accessing message may also be sent to the first terminal device from the mobile terminal.

In step S504, the first terminal device saves the accessing message received.

In step S505, the first terminal device communicates with the second terminal device.

In the step S505, the first terminal device may communicate with the second terminal device via a second wireless communicating technology.

The password authentication is not required when the first terminal device communicates with the second terminal device via the second wireless communicating technology. The password authentication is not required when the first terminal device communicates with the second terminal device, so as to facilitate a terminal device of other users to directly acquire the accessing message of the electricity-consuming device in the case that the user who knows the communicating password of the first terminal device is absent. During implementation, the second wireless communicating technology may be the Bluetooth technology; the first terminal device may serve as the peripheral device; while the second terminal device may serve as the center device; and the first terminal device is configured to communicate via the Bluetooth technology without the password authentication by default.

In step S506, the first terminal device acquires the accessing message sending instruction. The accessing message sending instruction is used for instructing the first terminal device to send the accessing message to the second terminal device.

In an implementation of the present embodiment, the step S506 may include: detecting a user's gesture; and triggering the accessing message sending instruction if a preset gesture is detected.

The preset gesture includes, for example, detecting that the user shakes or knocks the smartband, or the like.

In another implementation of the present embodiment, the step S506 may include: receiving the accessing message sending instruction sent from the second terminal device. In step S507, the first terminal device sends the accessing message to the second terminal device.

In step S508, the second terminal device communicates with the household appliance using the accessing message received.

In the present embodiment, after the second terminal device acquires the accessing message, it may request to immediately communicate with the household appliance wirelessly, so as to further reduce user's operating steps, thereby improving user experience. In another implementation of the present embodiment, after the second terminal device acquires the accessing message, it may merely save the accessing message acquired, and request to communicate with the household appliance wirelessly after receiving a user's instruction. Accordingly, in this implementation, the step S508 may include:
the second terminal device receiving a communicating instruction input; and
establishing a communication with the household appliance wirelessly using the accessing message in accordance with the communicating instruction received.

In step S509, the household appliance saves an identification of the second terminal device.

The identification of the second terminal device may be a MAC address.

Through the step S509, the second terminal device acquires the using authority of the household appliance. Accordingly, the method of the present embodiment may further include:
the household appliance receiving a second appliance controlling instruction sent from the second terminal device, the second appliance controlling instruction including the identification of the second terminal device;
the household appliance comparing the identification of the second terminal device in the second appliance controlling instruction with the identification of the terminal device saved in the household appliance;
executing the second appliance controlling instruction received if the identification of the second terminal device in the second appliance controlling instruction is identical to the identification of the terminal device saved in the household appliance (indicating that the second terminal device has the using authority); and
not executing the second appliance controlling instruction received if the identification of the second terminal device in the second appliance controlling instruction is different from the identification of the terminal device saved in the household appliance (indicating that the second terminal device does not have the using authority).

In an implementation of the present embodiment, the method may further include:
the household appliance deleting the identification of the first terminal device when the first terminal device is disconnected from the household appliance; or the household appliance deleting the identification of the second terminal device when the second terminal device is disconnected from the household appliance.

In another implementation of the present embodiment, the household appliance may also save identifications of all terminal devices which had been connected with the electricity-consuming device before, instead of deleting (or deleting an identification of a terminal device which does not communicate with the electricity-consuming device within a preset time period).

In addition, in a further implementation of the present embodiment, the method may further include:
the second terminal device communicating with the electricity-consuming device via a third wireless communicating technology, other than the WIFI technology, such as the Bluetooth technology.

In the case that the third wireless communicating technology is the Bluetooth technology, the second terminal device is the center device, and the electricity-consuming device is the peripheral device, the authentication is generally required when accessing the electricity-consuming device for the sake of safety, such that the second terminal device communicates with the electricity-consuming device after the password authentication is verified.

It should be noted that in embodiments of the present disclosure, the first terminal device is preferably a wearable device, such as a smartband; while the second terminal device is preferably a mobile terminal, such as a mobile phone. That is because using the wearable device as the first terminal device facilitates reducing cost; and it is more general to access the electricity-consuming device from the mobile terminal carried with the user, as the mobile terminal is usually carried around the user. In addition, it is apparent that the method in the present embodiment is also adapted to the router.

According to embodiments of the present disclosure, the accessing message of the electricity-consuming device serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

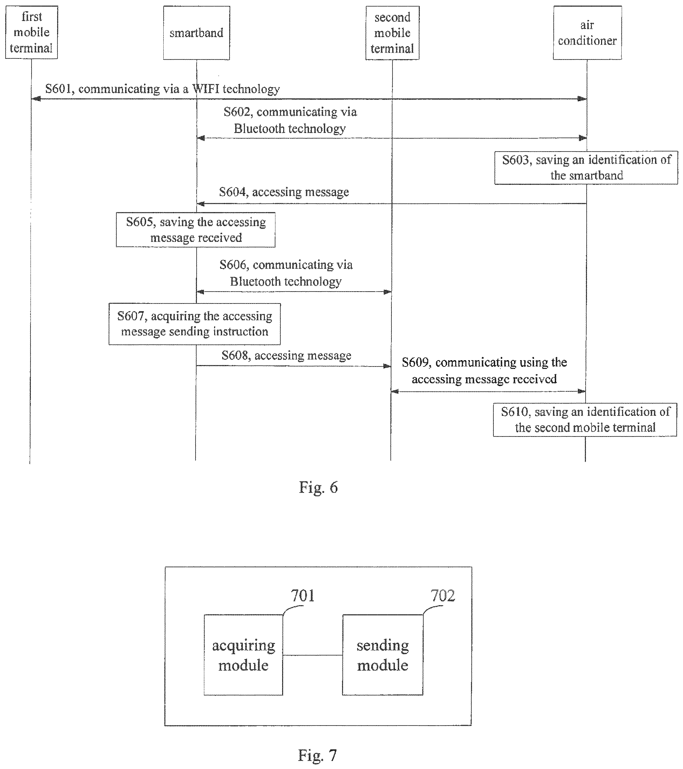

Fig. 6 is an interaction diagram showing a method for acquiring a using authority according to an illustrative embodiment. In the present embodiment, the present disclosure is described by taking the electricity-consuming device being an air conditioner, the first terminal device being a smartband, and the second terminal device being a mobile terminal (i.e., the application scenario as shown in Fig. 1) as an example. Besides, in the present embodiment, the air conditioner is provided with a Bluetooth communicating module and a WIFI communicating module. As shown in Fig. 6, the method includes the following steps.

In step S601, a first mobile terminal communicates with an air conditioner via the WIFI technology.

During implementation, the step S601 may include:
the first mobile terminal displaying an accessible SSID list;
the first mobile terminal receiving an accessing instruction input, including a SSID and a password of the air conditioner and used for instructing the first mobile terminal to send an accessing request (carrying the SSID and the password of the air conditioner) to the air conditioner;
the air conditioner receiving the accessing request sent from the first mobile terminal and subjecting the password in the accessing request to authentication;
allowing the first mobile terminal to access the air conditioner if the authentication is verified;
not allowing the first mobile terminal to access the air conditioner if the authentication is not verified.

During implementation, the first mobile terminal in the step S601 may be a mobile terminal belonging to a householder or a resident.

In step S602, the smartband communicates with the air conditioner via the Bluetooth technology.

In the step S602, the smartband may serve as the peripheral device; while the air conditioner serves as the center device.

The step S602 may include:
the air conditioner receiving a scanning instruction from the first mobile terminal;
the air conditioner scanning a Bluetooth device;
the air conditioner sending the Bluetooth device scanned to the first mobile terminal;
the first mobile terminal displaying the Bluetooth device scanned by the air conditioner;
the first mobile terminal receiving a selecting instruction input and generating a device communicating instruction in accordance with the selecting instruction, the device communicating instruction including an identification of the smartband;
initiating a Bluetooth communication with the smartband in accordance with the first device communicating instruction sent from the first mobile terminal, so as to establish a communication with the smartband via the Bluetooth technology.

In step S603, the air conditioner saves the identification of the smartband.

The identification of the smartband may be a MAC address.

Through the step S603, the smartband acquires a controlling authority to the air conditioner. Accordingly, the method of the present embodiment may further include:
the air conditioner receiving a first appliance controlling instruction sent from the smartband, the first appliance controlling instruction including the identification of the smartband;
the air conditioner comparing the identification of the smartband in the first appliance controlling instruction with an identification of the terminal device saved in the air conditioner;
executing the first appliance controlling instruction received if the identification of the smartband in the first appliance controlling instruction is identical to the identification of the terminal device saved in the air conditioner (indicating that the smartband has the controlling authority); and
not executing the first appliance controlling instruction received if the identification of the smartband in the first appliance controlling instruction is different from the identification of the terminal device saved in the air conditioner (indicating that the smartband does not have the controlling authority).

The first appliance controlling instruction may be used to set up an ON state, an OFF state, an operating time, a gear or an operating mode of the air conditioner, but the disclosure is not limited to such examples.

During implementation, the first appliance controlling instruction sent from the smartband may also be generated in the following manners:
detecting a user's gesture; and
determining an appliance controlling instruction corresponding to the user's gesture.

For example, in the case that the user's gesture is that the smartband is knocked for one time, the appliance controlling instruction corresponds to turning on the air conditioner; in the case that the user's gesture is that the smartband is knocked for two successive times, the appliance controlling instruction corresponds to turning off the air conditioner; in the case that the user's gesture is that the smartband is shaken left and right, the appliance controlling instruction corresponds to enabling the air conditioner to be in a left-and-right sweeping mode; in the case that the user's gesture is that the smartband is shaken up and down, the appliance controlling instruction corresponds to enabling the air conditioner to be in an up-and-down sweeping mode. The above mentioned correspondences between the user's gestures and the appliance controlling instructions are merely by way of example, and are not limiting.

The step S603 is an optional step. In the case that the smartband merely serves as an intermediate device for saving the accessing message, other than controlling the household appliance, the step S603 may not be executed.

In step S604, the air conditioner sends the accessing message to the smartband.

The accessing message, including the SSID and the password of the air conditioner, is used for enabling the first terminal device to access the air conditioner as an access point. In the present embodiment, the accessing message is sent to the smartband from the air conditioner. In other embodiments, the accessing message may also be sent to the smartband from the first mobile terminal.

In step S605, the smartband saves the accessing message received.

In step S606, the smartband communicates with a second mobile terminal.

In the step S606, the smartband communicates the second mobile terminal via the Bluetooth technology; the smartband serves as the peripheral device; the second mobile terminal serves as the center device; and the smartband is configured to communicate via the Bluetooth technology without the password authentication by default.

During implementation, the second mobile terminal in the step S606 may be a mobile terminal belonging to a guest or a tenant. It should be noted that in the present embodiment, the first mobile terminal controlling the smartband to communicate with the air conditioner via the Bluetooth technology is different from the second mobile terminal acquiring the accessing message from the smartband subsequently. In other embodiments, the first mobile terminal controlling the smartband to communicate with the air conditioner via the Bluetooth technology may also be identical to the second mobile terminal acquiring the accessing message from the smartband subsequently.

In step S607, the smartband acquires the accessing message sending instruction.

In an implementation of the present embodiment, the step S607 may include: detecting a user's gesture; and triggering the accessing message sending instruction if a preset gesture is detected.

The preset gesture includes, for example, detecting that the user shakes or knocks the smartband, or the like.

In another implementation of the present embodiment, the step S607 may include: receiving the accessing message sending instruction sent from the second mobile terminal.

In step S608, the smartband sends the accessing message to the second mobile terminal. In step S609, the second mobile terminal communicates with the air conditioner using the accessing message received.

In the present embodiment, after the second mobile terminal acquires the accessing message, it may request to communicate with the air conditioner immediately, so as to further reduce the user's operating steps, thereby improving user experience. In another implementation of the present embodiment, after the second mobile terminal acquires the accessing message, it may merely save the accessing message acquired, and request to communicate with the air conditioner wirelessly after receiving a user's instruction. Accordingly, in this implementation, the step S508 may include:
the second mobile terminal receiving a communicating instruction input; and
establishing a communication with the air conditioner using the accessing message in accordance with the communicating instruction received.

In step S610, the air conditioner saves an identification of the second mobile terminal. The identification of the second mobile terminal may be a MAC address.

Through the step S610, the second mobile terminal acquires a controlling authority of the air conditioner. Accordingly, the method of the present embodiment may further include:
the air conditioner receiving the second appliance controlling instruction sent from the second mobile terminal, the second appliance controlling instruction including the identification of the second mobile terminal;
the air conditioner comparing the identification of the second mobile terminal in the second appliance controlling instruction with the identification of the terminal device saved;
executing the second appliance controlling instruction received if the identification of the second mobile terminal in the second appliance controlling instruction is identical to the identification of the terminal device saved in the air conditioner (indicating that the second mobile terminal has the using authority); and
not executing the second appliance controlling instruction received if the identification of the second mobile terminal in the second appliance controlling instruction is different from the identification of the terminal device saved in the air conditioner (indicating that the second mobile terminal does not have the using authority).

In an implementation of the present embodiment, the method may further include:
the air conditioner deleting the identification of the smartband when the smartband is disconnected from the air conditioner; or
the air conditioner deleting the identification of the first mobile terminal when the first mobile terminal is disconnected from the air conditioner.

According to embodiments of the present disclosure, the accessing message of the air conditioner when serving as the access point is saved in the smartband, the second mobile terminal may acquire the accessing message directly from the smartband, so as to communicate with the air conditioner using the accessing message and acquire the using authority thereof. In the case that the accessing message of the air conditioner has been forgotten or the user who knows the accessing message of the air conditioner is absent, such a means by which the accessing message is acquired provides great convenience for the user.

Fig. 7 is a schematic diagram showing a device for acquiring a using authority according to an illustrative embodiment. The device is for use in a first terminal device, referring to Fig. 7, the device includes an acquiring module 701 and a sending module 702.

The acquiring module 701 is configured to acquire an accessing message sending instruction, for instructing the first terminal device to send an accessing message of an electricity-consuming device to a second terminal device, the accessing message including a SSID and a password of the electricity-consuming device.

The sending module 702 is configured to send the accessing message of the electricity-consuming device to the second terminal device in accordance with the accessing message sending instruction. The accessing message is used to establish a communication between the second terminal device and the electricity-consuming device. According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

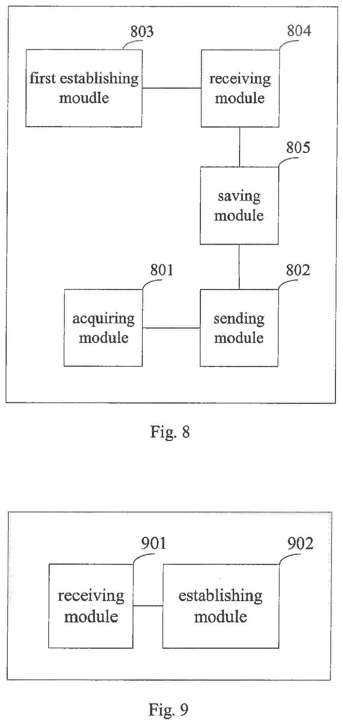

Fig. 8 is a schematic diagram showing a device for acquiring a using authority according to an illustrative embodiment. The device is for use in the first terminal device, referring to Fig. 8, the device includes an acquiring module 801 and a sending module 802. The acquiring module 801 is configured to acquire an accessing message sending instruction, for instructing the first terminal device to send an accessing message of an electricity-consuming device to a second terminal device. The accessing message includes a SSID and a password of the electricity-consuming device. The sending module 802 is configured to send the accessing message of the electricity-consuming device to the second terminal device in accordance with the accessing message sending instruction. The accessing message is used to establish a communication between the second terminal device and the electricity-consuming device.

In a possible implementation of the present embodiment, the acquiring module 801 is configured to acquire an accessing message sending instruction input; or the acquiring module 801 is configured to receive the accessing message sending instruction sent from the second terminal device.

In another possible implementation of the present embodiment, the device further includes: a first establishing module 803; a receiving module 804 and a saving module 805. The first establishing module 803 is configured to establish a communication with the electricity-consuming device; the receiving module 804 is configured to receive the accessing message sent from the electricity-consuming device; and the saving module 805 is configured to save the accessing message received by the receiving module 804. Further, the first establishing module 803 is configured to establish the communication with the electricity-consuming device via a first wireless communicating technology, including but not limited to a Bluetooth technology, a wireless fidelity technology or a Zigbee communicating technology.

Further, in the case that the first establishing module 803 establishes the communication with the electricity-consuming device via the Bluetooth technology, the first terminal device serves as a peripheral device; while the electricity-consuming device serves as a center device.

In another possible implementation of the present embodiment, the device further includes: a second establishing module 806, configured to establish a communication with the second terminal device via a second wireless communicating technology, during which the password does not need to be authenticated.

The first terminal device may be a wearable device; the second terminal device may be a mobile terminal. The electricity-consuming device may include a household appliance and a router.

According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

Fig. 9 is a block diagram showing a device for acquiring a using authority according to an illustrative embodiment. The device is for use in the second terminal device, referring to Fig. 9, the device includes a receiving module 901 and an establishing module 902. The receiving module 901 is configured to receive the accessing message of the electricity-consuming device sent from the first terminal device. The accessing message includes a Service Set Identifier (SSID) and a password of the electricity-consuming device. The establishing module 902 is configured to establish a communication with the electricity-consuming device using the accessing information received by the receiving module 901.

According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

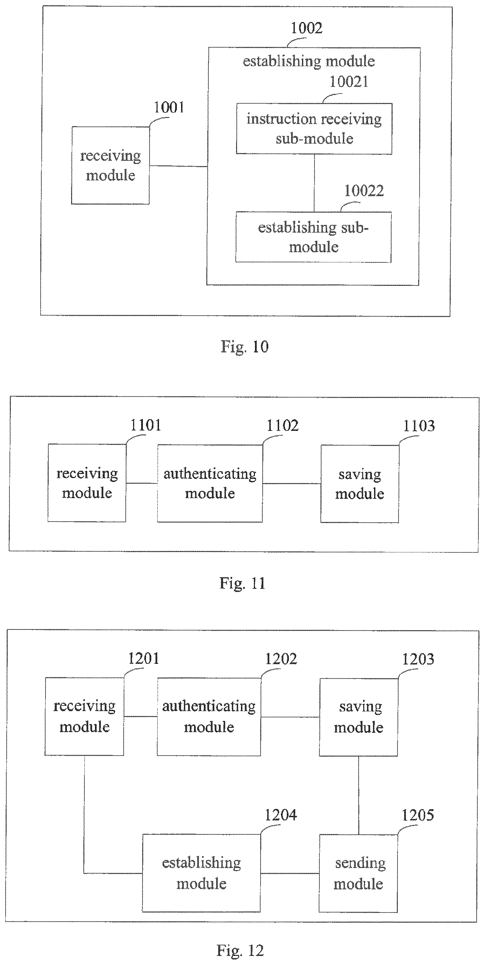

Fig. 10 is a block diagram showing a device for acquiring a using authority according to an illustrative embodiment. The device is for use in the second terminal device, referring to Fig. 10, the device includes a receiving module 1001 and an establishing module 1002. The receiving module 1001 is configured to receive the accessing message of the electricity-consuming device sent from the first terminal device. The accessing message includes a Service Set Identifier (SSID) and a password of the electricity-consuming device. The establishing module 1002 is configured to establish a communication with the electricity-consuming device using the accessing information received by the receiving module 1001.

In an implementation of the present embodiment, the establishing module 1002 includes: an instruction receiving sub-module 10021 and an establishing sub-module 10022. The instruction receiving sub-module 10021 is configured to receive a communicating instruction input. The establishing sub-module 10022 is configured to establish the communication with the electricity-consuming device using the accessing message in accordance with the communicating instruction received from the instruction receiving sub-module 10021.

In another implementation of the present embodiment, the establishing module 1002 is configured to establish a communication with the first terminal device via a second wireless communicating technology, during which the password does not need to be authenticated.

The first terminal device may be a wearable device; the second terminal device may be a mobile terminal; the electricity-consuming device may include a household appliance and a router.

According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

Fig. 11 is a block diagram showing a device for acquiring a using authority according to an illustrative embodiment. The device is for use in the electricity-consuming device, referring to Fig. 11, the device includes: a receiving module 1101, an authenticating module 1102, and a saving module 1103. The receiving module 1101 is configured to receive a communicating request sent from the second terminal device. The communicating request includes an identification of the second terminal device, an accessing message of the electricity-consuming device. The accessing message, including a Service Set Identifier (SSID) and a password of the electricity-consuming device, is acquired from the first terminal device by the second terminal device. The authenticating module 1102 is configured to subject the second terminal device to authentication in accordance with the communicating request received by the receiving module 1101. The saving module 1103 is configured to save the identification of the second terminal device if the authentication of the second terminal device is verified.

According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired provides great convenience for the user.

Fig. 12 is a block diagram showing a device for acquiring a using authority according to an illustrative embodiment. The device is for use in the electricity-consuming device, referring to Fig. 12, the device includes: a receiving module 1201, an authenticating module 1202, and a saving module 1203. The receiving module 1201 is configured to receive a communicating request sent from the second terminal device. The communicating request includes an identification of the second terminal device, an accessing message of the electricity-consuming device. The accessing message, including a Service Set Identifier (SSID) and a password of the electricity-consuming device, is acquired from the first terminal device by the second terminal device. The authenticating module 1202 is configured to subject the second terminal device to authentication in accordance with the communicating request received by the receiving module 1201. The saving module 1203 is configured to save the identification of the second terminal device when the authentication of the second terminal device is verified.

In an implementation of the present embodiment, the device further includes: an establishing module 1204 and a sending module 1205. The establishing module 1204 is configured to establish a communication with the first terminal device. The sending module 1205 is configured to send the accessing message to the first terminal device.

In another implementation of the present embodiment, the establishing module 1204 is further configured to establish a communication with the second terminal device.

The first terminal device may be a wearable device; the second terminal device may be a mobile terminal; and the electricity-consuming device may include a household appliance and a router.

According to embodiments of the present disclosure, the accessing message of the electricity-consuming device when serving as the access point is saved in the first terminal device, the second terminal device may acquire the accessing message of the electricity-consuming device directly from the first terminal device, so as to communicate with the electricity-consuming device using the accessing message and acquire the using authority thereof. In the case that the accessing message of the electricity-consuming device has been forgotten or the user who knows the accessing message of the electricity-consuming device is absent, such a means by which the accessing message is acquired brings out great convenience for the user.

With respect to the devices in the above embodiments, the specific manners for performing operations for individual modules therein have been described in detail in the embodiments regarding the methods for acquiring the using authority, which will not be elaborated herein.

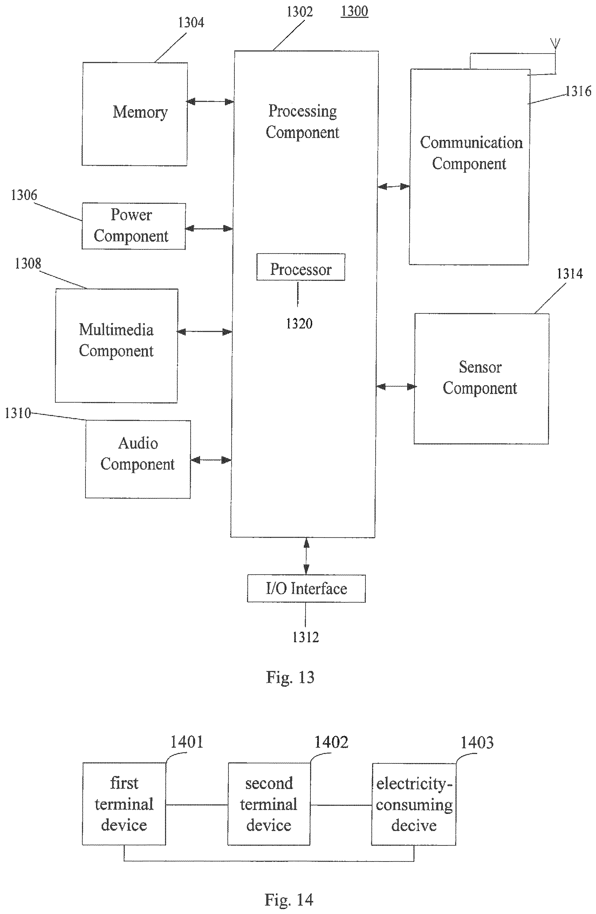

Fig. 13 is a block diagram showing a device 1300 for acquiring a using authority according to an illustrative embodiment. For example, the device 1300 may be a wearable device, a mobile phone, a computer, a digital broadcast terminal, a message receiving-and-sending device, a gaming console, a tablet device, a medical device, exercise equipment, a personal digital assistant, an electricity-consuming device, and the like. The electricity-consuming device includes, but is not limited to, a household appliance, and a router. The household appliance may be a television, a refrigerator, a washer, an air conditioner, and so on.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 802 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. The sensor component 1314 includes a plurality of self-capacitive sensors disposed at left and right edges of the touch screen. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WIFI, 2G, or 3G, or a combination thereof. In one illustrative embodiment, the communication component 1316 receives a broadcast signal or broadcast associated information from an external broadcast management system via a broadcast channel. In one illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

It should be noted that in the case that the device 1300 is the wearable device, the device 1300 may be not provided with one or more of the above described compoments, e.g., the multimedia component 1308, the audio component 1310, and the I/O interface 1312. The sensor in the sensor component 1314 may also be selected as practical application. In the case that the device 1300 is the electricity-consuming device, similarly, it may be provided with the multimedia component 1308, the audio component 1310, and the I/O interface 1312 among the above described compoments as required; and select an appropraite sensor and communicating components. For example, the household appliance may not need to be provided with a Second-Generation mobile communicating technology, a Third-Generation mobile communicating technology, or the like.

In illustrative embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a Random Access Memory (RAM), a Compact Disc Read-Only Memory (CD-ROM), a magnetic tape, a floppy disc, an optical data storage device, and the like.

A non-transitory computer-readable storage medium includes instructions, when executed by a process of a terminal device (e.g., a mobile device or a wearable device), allowing the terminal device to be capable of executing a method for acquiring a using authority. The method includes:
acquiring an accessing message sending instruction for instructing the first terminal device to send an accessing message of an electricity-consuming device to a second terminal device, the accessing message comprising a service set identifier (SSID) and a password of the electricity-consuming device; and
sending the accessing message of the electricity-consuming device to the second terminal device in accordance with the accessing message sending instruction, in which the accessing message is used to establish a communication between the second terminal device and the electricity-consuming device.

Acquiring the accessing message sending instruction may include:
acquiring the accessing message sending instruction input; or
receiving the accessing message sending instruction sent from the second terminal device.

In an implementation of the present embodiment, the method further includes:
establishing a communication with the electricity-consuming device; and
receiving and saving the accessing message sent from the electricity-consuming device.

Further, establishing the communication with the electricity-consuming device includes:
establishing the communication with the electricity-consuming device via a first wireless communicating technology, comprising a Bluetooth technology, a wireless fidelity (WIFI) technology, or a Zigbee communicating technology.

Further, in the case that the first terminal device establishes a communication with the electricity-consuming device via the Bluetooth technology, the first terminal device serves as a peripheral device, and the electricity-consuming device serves as a center device.

In another implementation of the present embodiment, the method further includes: establishing a communication with the second terminal device via a second wireless communicating technology, during which password authentication is not required.

A non-transitory computer-readable storage medium includes instructions, when executed by a process of a terminal device (e.g., a mobile device or a wearable device), allowing the terminal device to be capable of executing a method for acquiring a using authority. The method includes:
receiving an accessing message of an electricity-consuming device sent from a first terminal device, the accessing message including a service set identifier (SSID) and a password of the electricity-consuming device; and
establishing a communication with the electricity-consuming device using the accessing message.

In an implementation of the present embodiment, establishing the communication with the electricity-consuming device using the accessing message includes:
receiving a communicating instruction input; and
establishing the communication with the electricity-consuming device using the accessing message in accordance with the communicating instruction.

In another implementation of the present embodiment, the method further includes:
establishing a communication with the first terminal device via a second wireless
communicating technology, during which password authentication is not required.

A non-transitory computer-readable storage medium includes instructions, when executed by a process of an electricity-consuming device, allowing the electricity-consuming device to be capable of executing a method for acquiring a using authority. The method includes:
receiving a communicating request sent from a second terminal device; the communicating request including an identification of the second terminal device and an accessing message of the electricity-consuming device; the accessing message, including a service set identifier (SSID) and a password of the electricity-consuming device, is acquired from the first terminal device by the second terminal device;
subjecting the second terminal device to authentication in accordance with the communicating request received; and
saving the identification of the second terminal device if the authentication of the second terminal device is verified.

In an implementation of the present embodiment, the method further includes:
establishing a communication with the first terminal device; and
sending the accessing message to the first terminal device.

Fig. 14 is a block diagram showing a system for acquiring a using authority according to an illustrative embodiment. As shown in Fig. 14, the system includes: a first terminal device 1401, a second terminal device 1402, and an electricity-consuming device 1403.

The first terminal device 1401 includes the device for acquiring the using authority as shown in Fig. 6 or 7. The second terminal device 1402 includes the device for acquiring the using authority as shown in Fig. 8 or 9. The electricity-consuming device 1403 includes the device for acquiring the using authority as shown in Fig. 10 or 11.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art, the scope being defined by the claims.

## Claims

1. A method for acquiring a using authority for use in a first terminal device, comprising:
establishing communication (S501) between the first terminal device with a household appliance via Bluetooth; wherein establishing communication comprises (S501):
the household appliance receiving a scanning instruction from a mobile terminal;
the household appliance scanning the first terminal device and sending an identification of the first terminal device scanned to the mobile terminal;
the mobile terminal displaying the first terminal device scanned by the household appliance;
the mobile terminal receiving a selecting instruction input and generating a device communicating instruction in accordance with the selecting instruction, the device communicating instruction including an identification of the first terminal device;
the mobile terminal sending the device communicating instruction to the household appliance;
the household appliance initiating a Bluetooth communication with the first terminal device in accordance with the device communicating instruction;
the method further comprising:
the first terminal device acquiring (S201) an accessing message sending instruction for instructing the first terminal device to send an accessing message of the household appliance to the mobile terminal, the accessing message comprising a service set identifier, SSID, and a password of the household appliance;
the first terminal device receiving and saving the accessing message sent from the household appliance; and
the first terminal device sending (S202) the accessing message of the household appliance to the mobile terminal in accordance with the accessing message sending instruction, wherein the accessing message is used to establish a communication between the mobile terminal and the household appliance.

2. The method according to claim 1, further comprising:
establishing a communication with the mobile terminal via a second wireless communicating technology, during which password authentication is not required.

3. The method according to any one of claims 1 and 2, wherein the first terminal device is a wearable device.

4. A system for acquiring a using authority in a first terminal device, the system configured to establish communication (S501) between the first terminal device with a household appliance via Bluetooth, the system comprising:
a first terminal device;
a mobile device; and
a household appliance;
wherein the household appliance is configured to:
receive a scanning instruction from the mobile terminal; and scan the first terminal device and send an identification of the first terminal device scanned to the mobile terminal;
wherein the mobile terminal is configured to:
display the first terminal device scanned by the household appliance;
receive a selecting instruction input and generate a device communicating instruction in accordance with the selecting instruction, the device communicating instruction including an identification of the first terminal device; and
send the device communicating instruction to the household appliance;
wherein the household appliance is further configured to:
initiate a Bluetooth communication with the first terminal device in accordance with
the device communicating instruction;
and wherein the first terminal device is configured to:
acquire (S201) an accessing message sending instruction for instructing the first terminal device to send an accessing message of an household appliance to the mobile terminal, the accessing message comprising a service set identifier, SSID, and a password of the household appliance;
receive and save the accessing message sent from the household appliance; and
send (S202) the accessing message of the household appliance to the mobile terminal in accordance with the accessing message sending instruction, wherein the accessing message is used to establish a communication between the mobile terminal and the household appliance.

5. The system of claim 4, wherein the first terminal device is further configured to:
establish a communication with the mobile terminal via a second wireless communicating technology, during which password authentication is not required.

6. The system of claim 4 or 5, wherein the first terminal device is a wearable device.

## Patentansprüche

1. Verfahren zum Beziehen einer Verwendungsgenehmigung zur Verwendung in einer ersten Endgerätevorrichtung, umfassend:
Aufbauen einer Kommunikation (S501) zwischen der ersten Endgerätevorrichtung und einem Haushaltsgerät über Bluetooth; wobei das Aufbauen der Kommunikation umfasst (S501):
Empfangen einer Scan-Anweisung durch das Haushaltsgerät von einem mobilen Endgerät;
Scannen der ersten Endgerätevorrichtung durch das Haushaltsgerät und Senden einer Identifikation der gescannten ersten Endgerätevorrichtung an das mobile Endgerät;
Anzeigen der durch das Haushaltsgerät gescannten ersten Endgerätevorrichtung durch das mobile Endgerät;
Empfangen einer Auswahlanweisungseingabe durch das mobile Endgerät und Erzeugen einer Vorrichtungskommunikationsanweisung in Übereinstimmung mit der Auswahlanweisung, wobei die Vorrichtungskommunikationsanweisung eine Identifikation der ersten Endgerätevorrichtung einschließt;
Senden der Vorrichtungskommunikationsanweisung durch das mobile Endgerät an das Haushaltsgerät;
Initiieren einer Bluetooth-Kommunikation mit der ersten Endgerätevorrichtung durch das Haushaltsgerät in Übereinstimmung mit der Vorrichtungskommunikationsanweisung;
wobei das Verfahren weiter umfasst:
Beziehen (S201) einer Zugriffsnachrichten-Sendeanweisung, um die erste Endgerätevorrichtung dazu anzuweisen, eine Zugriffsnachricht des Haushaltsgeräts an das mobile Endgerät zu senden, durch die erste Endgerätevorrichtung, wobei die Zugriffsnachricht einen Service Set Identifier, SSID, und ein Kennwort des Haushaltsgeräts umfasst;
Empfangen und Speichern der vom Haushaltsgerät gesendeten Zugriffsnachricht durch die erste Endgerätevorrichtung; und
Senden (S202) der Zugriffsnachricht des Haushaltsgeräts durch die erste Endgerätevorrichtung in Übereinstimmung mit der Zugriffsnachrichten-Sendeanweisung an das mobile Endgerät, wobei die Zugriffsnachricht verwendet wird, um eine Kommunikation zwischen dem mobilen Endgerät und dem Haushaltsgerät aufzubauen.

2. Verfahren nach Anspruch 1, weiter umfassend:
Aufbauen einer Kommunikation mit dem mobilen Endgerät über eine zweite drahtlose Kommunikationstechnologie, bei der keine Kennwortauthentifizierung erforderlich ist.

3. Verfahren nach einem der Ansprüche 1 und 2, wobei es sich bei der ersten Endgerätevorrichtung um eine am Körper tragbare Vorrichtung handelt.

4. System zum Beziehen einer Verwendungsgenehmigung in einer ersten Endgerätevorrichtung, wobei das System so ausgelegt ist, dass es über Bluetooth eine Kommunikation (S501) zwischen der ersten Endgerätevorrichtung und einem Haushaltsgerät aufbaut, wobei das System umfasst:
eine erste Endgerätevorrichtung;
eine mobile Vorrichtung; und
ein Haushaltsgerät;
wobei das Haushaltsgerät so ausgelegt ist, dass es:
vom mobilen Endgerät eine Scan-Anweisung empfängt; und
die erste Endgerätevorrichtung scannt und eine Identifikation der gescannten ersten Endgerätevorrichtung an das mobile Endgerät sendet;
wobei das mobile Endgerät so ausgelegt ist, dass es:
die vom Haushaltsgerät gescannte ersten Endgerätevorrichtung anzeigt;
eine Auswahlanweisungseingabe empfängt und in Übereinstimmung mit der Auswahlanweisung eine Vorrichtungskommunikationsanweisung erzeugt, wobei die Vorrichtungskommunikationsanweisung eine Identifikation der ersten Endgerätevorrichtung einschließt; und
die Vorrichtungskommunikationsanweisung an das Haushaltsgerät sendet;
wobei das Haushaltsgerät weiter so ausgelegt ist, dass es:
in Übereinstimmung mit der Vorrichtungskommunikationsanweisung eine Bluetooth-Kommunikation mit der ersten Endgerätevorrichtung initiiert;
und wobei die erste Endgerätevorrichtung so ausgelegt ist, dass sie:
eine Zugriffsnachrichten-Sendeanweisung, um die erste Endgerätevorrichtung dazu anzuweisen, eine Zugriffsnachricht eines Haushaltsgeräts an das mobile Endgerät zu senden, bezieht (S201), wobei die Zugriffsnachricht einen Service Set Identifier, SSID, und ein Kennwort des Haushaltsgeräts umfasst;
die vom Haushaltsgerät gesendete Zugriffsnachricht empfängt und speichert; und
die Zugriffsnachricht des Haushaltsgeräts in Übereinstimmung mit der Zugriffsnachrichten-Sendeanweisung an das mobile Endgerät sendet (S202), wobei die Zugriffsnachricht verwendet wird, um eine Kommunikation zwischen dem mobilen Endgerät und dem Haushaltsgerät aufzubauen.

5. System nach Anspruch 4, wobei die erste Endgerätevorrichtung weiter so ausgelegt ist, dass sie:
über eine zweite drahtlose Kommunikationstechnologie, bei der keine Kennwortauthentifizierung erforderlich ist, eine Kommunikation mit dem mobilen Endgerät aufbaut.

6. System nach Anspruch 4 oder 5, wobei es sich bei der ersten Endgerätevorrichtung um eine am Körper tragbare Vorrichtung handelt.

## Revendications

1. Procédé pour acquérir une autorisation d'utilisation destinée à être utilisée dans un premier dispositif terminal, comprenant :
l'établissement d'une communication (S501) entre le premier dispositif terminal avec un appareil ménager par le biais de Bluetooth ; dans lequel l'établissement d'une communication comprend (S501) :
l'appareil ménager recevant une instruction de balayage en provenance d'un terminal mobile ;
l'appareil ménager balayant le premier dispositif terminal et envoyant une identification du premier dispositif terminal balayé au terminal mobile ;
le terminal mobile affichant le premier dispositif terminal balayé par l'appareil ménager ;
le terminal mobile recevant une entrée d'instruction de sélection et générant une instruction de communication de dispositif selon l'instruction de sélection, l'instruction de communication de dispositif incluant une identification du premier dispositif terminal ;
le terminal mobile envoyant l'instruction de communication de dispositif à l'appareil ménager ;
l'appareil ménager initiant une communication Bluetooth avec le premier dispositif terminal selon l'instruction de communication de dispositif ;
le procédé comprenant en outre :
le premier dispositif terminal acquérant (S201) une instruction d'envoi de message d'accès pour ordonner au premier dispositif terminal d'envoyer un message d'accès de l'appareil ménager au terminal mobile, le message d'accès comprenant un identifiant d'ensemble de services, SSID, et un mot de passe de l'appareil ménager ;
le premier dispositif terminal recevant et sauvegardant le message d'accès envoyé depuis l'appareil ménager ; et
le premier dispositif terminal envoyant (S202) le message d'accès de l'appareil ménager au terminal mobile selon l'instruction d'envoi de message d'accès, dans lequel le message d'accès est utilisé pour établir une communication entre le terminal mobile et l'appareil ménager.

2. Procédé selon la revendication 1, comprenant en outre :
l'établissement d'une communication avec le terminal mobile par le biais d'une seconde technologie de communication sans fil pendant laquelle une authentification de mot de passe n'est pas requise.

3. Procédé selon l'une quelconque des revendications 1 et 2, dans lequel le premier dispositif terminal est un dispositif portable.

4. Système pour acquérir une autorisation d'utilisation dans un premier dispositif terminal, le système étant configuré pour établir une communication (S501) entre le premier dispositif terminal avec un appareil ménager via Bluetooth, le système comprenant :
un premier dispositif terminal ;
un dispositif mobile ; et
un appareil ménager ;
dans lequel l'appareil ménager est configuré pour :
recevoir une instruction de balayage en provenance du terminal mobile ; et
balayer le premier dispositif terminal et envoyer une identification du premier dispositif terminal balayé au terminal mobile ;
dans lequel le terminal mobile est configuré pour :
afficher le premier dispositif terminal balayé par l'appareil ménager ;
recevoir une entrée d'instruction de sélection et générer une instruction de communication de dispositif selon l'instruction de sélection, l'instruction de communication de dispositif incluant une identification du premier dispositif terminal ; et
envoyer l'instruction de communication de dispositif à l'appareil ménager ;
dans lequel l'appareil ménager est en outre configuré pour :
initier une communication Bluetooth avec le premier dispositif terminal selon l'instruction de communication de dispositif ;
et dans lequel le premier dispositif terminal est configuré pour :
acquérir (S201) une instruction d'envoi de message d'accès pour ordonner au premier dispositif terminal d'envoyer un message d'accès d'un appareil ménager au terminal mobile, le message d'accès comprenant un identifiant d'ensemble de services, SSID, et un mot de passe de l'appareil ménager ;
recevoir et sauvegarder le message d'accès envoyé depuis l'appareil ménager ; et
envoyer (S202) le message d'accès de l'appareil ménager au terminal mobile selon l'instruction d'envoi de message d'accès, dans lequel le message d'accès est utilisé pour établir une communication entre le terminal mobile et l'appareil ménager.

5. Système selon la revendication 4, dans lequel le premier dispositif terminal est en outre configuré pour :
établir une communication avec le terminal mobile par le biais d'une seconde technologie de communication sans fil pendant laquelle une authentification de mot de passe n'est pas requise.

6. Système selon la revendication 4 ou 5, dans lequel le premier dispositif terminal est un dispositif portable.
